# EUROPEAN PATENT SPECIFICATION

(11) **EP 3 358 983 B1**
(45) Date of publication and mention of the grant of the patent: **23.09.2020**
(21) Application number: 16797986.3
(22) Date of filing: 04.10.2016
(51) Int. Cl.: A43B 23/02, B29D 35/00, B29D 35/12, A43B 7/08

(54) **PROCESS AND APPARATUS FOR COUPLING AN INSERT TO A SHOE**
VERFAHREN UND VORRICHTUNG ZUR KOPPLUNG EINES EINSATZES AN EINEN SCHUH
PROCÉDÉ ET APPAREIL PERMETTANT DE RACCORDER À UNE CHAUSSURE UN ÉLÉMENT À INSÉRER

(30) Priority: 05.10.2015 IT UB20154168
(43) Date of publication of application: 15.08.2018
(73) Proprietor: Hawai Italia S.r.l., 37057 San Giovanni Lupatoto (VR) (IT)
(72) Inventor: SCIPIONI, Bruno, 37029 San Pietro in Cariano (VR) (IT)
(74) Representative: Fisauli, Beatrice A. M.
(86) International application number: PCT/IB2016/055917
(87) International publication number: WO 2017/060807

(56) References cited:
- EP-A1- 0 792 595
- EP-A1- 1 095 580
- EP-A2- 0 350 103
- EP-A2- 2 484 240
- US-A1- 2006 017 195

## Description

The present invention refers, in general, to a process and to the related apparatus for coupling an insert to a shoe. More particularly, the present invention refers to a process for coupling an already made insert to a shoe and to an apparatus which allows to carry out said process.

As is known, shoes can provide for the presence of inserts with aesthetic and/or technical functions. Said inserts can be sewn on the upper, closing a previously made hole.

Said type of fastening involves some risks as regards the waterproofing of the shoe, in addition to being wasteful in terms of time. In order to avoid problems of this type, the seal must be carried out in a precise way and, besides, glues or similar substances must be however utilized in order to seal the eventual slots between insert and upper, as the holes created by the stitching.

In case the upper to which the insert has to be attached, is made of plastic or rubber, the prior art also provides that the same insert can be fixed during the injection moulding process.

This fixing procedure is however very delicate, as the union between the upper and insert depends on numerous variables, such as the material of the two elements, their shape, the moulds used, the moulding techniques.

In addition, another problem of a coupling process of this kind appears to be the same management of the insert; in other words, the coupling can be obtained in an optimal manner, but the insert can be ruined due to the temperature inside the moulds, by the pressure operated by the same moulds, by an undesired insertion of molten material into the mould area used to accommodate the insert.

Footwears and related methods of manufacture are disclosed in patent documents EP 1 095 580 A1, EP 0 792 595 A1, US 2006/017195 A1, EP 2 484 240 A2 and EP 0 350 103 A2.

The aim of the invention is to overcome the problems mentioned above and others, by providing a process and a related apparatus for coupling an insert to a shoe in an optimal way.

A further aim of the invention is to provide a process and an apparatus by which a waterproof coupling between an insert and a shoe upper.

Another aim of the invention is to provide a process and an apparatus which allow to couple an insert to an upper in a fast and firm way by a injection moulding process.

These aims and benefits are all met, according to the invention, by a process for coupling an insert to an upper obtained by means of injection moulding, by injecting a plastic material in an interspace formed between a mould and a counter mould according to claim 1.

The insert can preferably comprise a membrane joined to a support and protection structure comprising, in its turn, a central portion formed by partitions and through-openings, a raised portion and a peripheral edge.

In this way, near the insert there is no possibility that the injected melt material covers even partially the insert, a part from the peripheral edge adapted to allow the coupling.

Besides, it is obtained that the insert has a face turned towards the outside and the opposite face turned towards the inside of the upper, without the presence of any barrier. This aspect is of great importance in the case in which the insert permits or improves the breathability of the footwear.

The process according to the invention can comprise the further phase of blocking the insert between mould and the counter mould in correspondence with a peripheral portion of the insert, shaped like a strip closed and in contact with both the mould and the counter mould. Thanks to this configuration of the mould and the counter mould, the pressure exerted by them on the insert is limited to such peripheral portion.

Advantageously, the peripheral portion of the insert can be shaped like a substantially circular crown.

Advantageously, the process according to the invention can provides that, when the insert is blocked between mould and counter mould, a further phase is comprised to create an empty chamber between counter mould and mould, and at least a free space between mould and insert, said empty chamber and at least one free space being included inside the peripheral portion so as to prevent mould and counter mould from contacting the portion of membrane arranged internally to the peripheral portion also during the phase of injection moulding . In this way, the contact of the mould and counter mould with the portion of the membrane arranged inside the peripheral portion is avoided, even during the injection moulding phase.

These aims and benefits are also met, according to the invention, by an apparatus for coupling an insert to an upper obtained by means of injection moulding , according to claim 5.

The insert can preferably comprise a membrane joined to a support and protection structure comprising, in turn, a central portion formed by partitions and through-openings, a raised portion and a peripheral edge.

The apparatus is characterized by the fact that the mould comprises a receiving element adapted to stably receive the insert, and the counter mould comprises a blocking element adapted to block the insert in the receiving element.

The blocking element comprises a protruding collar which defines an empty chamber between the same blocking element and the insert so as to block the same insert between mould and counter mould and put the insert in pressure in correspondence of the peripheral portion corresponding to the protruding collar.

Advantageously, the apparatus according to the invention can provides that the receiving element comprises at least one tooth adapted to be inserted in a corresponding opening. Thanks to the one or more teeth the insert is not able to translate on the mould, also during the injection moulding .

Besides, the one or more teeth can have a lower height than the height of the partitions so as to create one or more free space when mould and counter mould are placed against each other for the injection of the material to be moulded.

A step can be formed in the receiving element and it is adapted to receive the raised portion of the insert and to serve as a further block for the insert itself with respect to the mould.

Advantageously, the step can have a lower height than the height of the portion raised by the peripheral edge of the insert so as to create an annular seat which, in the moulding phase, filled with injected material, forms a wing that promotes the coupling between the insert and the upper

Besides, the receiving element can be received in the mould in a removable manner and/or the blocking element can be received in the counter mould in a removable manner. In this way, it is possible to easily substitute the receiving element and the blocking element, depending on the shape of the insert to be coupled, without always having to use new moulds in their entirety.

Further features and details of the invention will be better understood from the following specification, which is provided by way of a non-limiting example, as well as from the annexed drawings, wherein:
figure 1 is a synthetic side cross section view of an apparatus, according to the invention, for coupling an insert to an upper obtained by means of injection moulding between a mould and a counter mould;
figure 2 is a cross section side view of the insert of figure 1;
figure 3 is an isometric view of a first element to couple to the counter mould of the apparatus;
figure 4 is an isometric view of a second element to couple to the mould of the apparatus.

With reference to the figures attached, an apparatus is pointed with the reference number 10 suitable for coupling an insert 12 to an upper 14 of a shoe. The coupling is carried out by fixing carried out during the injection moulding of the upper itself 14.

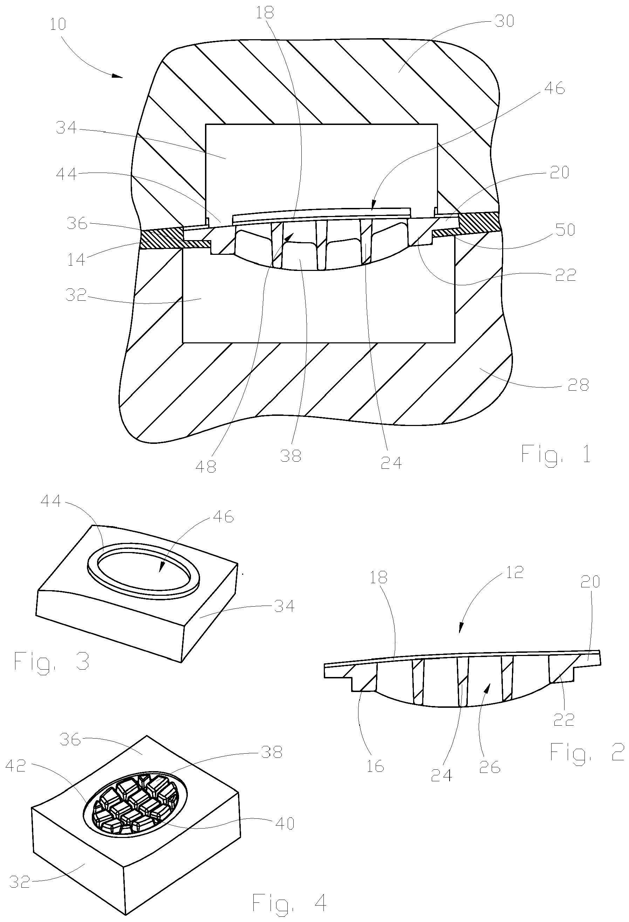

The insert 12, shown singularly in figure 2, is obtained previously to the fixing procedure to the upper 14 and comprises a support and protection structure 16 to which a membrane 18 breathable and waterproof is fixed.

The support and protection structure 16 comprises a edge 20 peripheral to a raised portion 22 inside which a lattice portion is developed made of a series of partitions 24 in order to obtain some through openings 26. The partitions 24 develop in height so as giving a convex shape to a face of the insert 12. Thanks to said configuration, near the through openings 26, the membrane 18, and so the entire insert 12, allows the air passage, but avoiding the water passage.

The apparatus 10 comprises a mould 28 and a counter mould 30 in which a receiving element 32 and a blocking element 34 are respectively received and fixed.

In figure 4 it is shown a receiving element 32 which provides that one of its face 36 comprises a convex portion from which teeth 38 protrude among which slots 40 are received.

The teeth 38 and the slots 40 of the receiving element have a shape homologous to the partitions 24 and to the opening 26 of the insert 12.

Besides, teeth 38 are isolated from the remaining portion of face 36 by a step 42.

The blocking element 34 comprises a projection 44 shaped as an annulus on the surface which is not in contact with the counter mould 30, so as, for instance, a protruding collar is shaped, so that a circular seat 46 is internally obtained.

The apparatus 10 provides that the counter mould 30 abuts the mould 28, so that an appropriate interspace is left in which, according to the prior art, the plastic material, in the molten state, is injected.

The interspace, having the shape of the desired upper, for example a boot, is so filled by plastic material which, once it is cooled, form the upper 14 of the shoe to be realized.

In the embodiment disclosed herein, the interspace is not filled in full, because of the presence of the insert 12 between the blocking element 34 and the receiving element 32 which are arranged in correspondence.

In particular, the process for the coupling of the insert 12 to the upper at first provides that the insert 12 is arranged in the receiving element 32, before the injection moulding of the upper.

More precisely, the partitions 24 of the insert 12 are arranged in the slots 40 of the receiving element 32 and the teeth 38 of the receiving element 32 itself are inserted in the openings 26 of the insert 12, but leaving a free space 48, since the teeth 38 are lower than the partitions 24. In this way the teeth 38 of the receiving element 32 do not touch the membrane 18.

The homologous shape between the insert 12 and receiving element 32 allows, besides, the raised portion 22 of the insert 12 to settle in the step 42 of the receiving element 32, making the edge 20 of the insert slightly separate from the face 36 of the receiving element 32 itself.

Once the insert 12 is settled in the receiving element 32, it is possible to proceed by placing the counter mould 30 in front of the mould 28, so as to create the desired interspace.

In this position, the blocking element 34 abut the insert 12, specifically against the face opposite to the one which the receiving element 32 is in contact with.

Precisely, the protrusion 44 abuts the annulus portion of the membrane 18 corresponding to the raised portion 22, while the presence of the circular seat 46 creates an empty room, avoiding that the blocking element 34 itself goes to pressure on or however touches the membrane 18.

Then, the membrane 18 is neither touched by the blocking element 34, nor by the receiving element 32 in the central portion comprised inside the raised portion 22.

Once the insert is blocked between the blocking element 34 and the receiving element 32, it proceeds with the injection of the melt plastic material inside the interspace created between the mould 28 and the counter mould 30.

The injected material places also between the receiving element 32 and the peripheral edge 20 of the insert 12, creating a wing 50 which so increases the contact surface between the insert and the injected upper 14, so as to improve the fixing between the insert and the upper.

The possibility of having autonomous sectors such as the receiving element 32 and the blocking element 34 permits to carry out the operations of coupling an insert such as the one described, to an upper, even in moulds and counter moulds i already in use.

Besides, having autonomous sectors allows to couple different inserts to uppers, by simply and only substituting the sectors, but not the entire moulds.

Further variants are possible to be considered within the scope of protection; for example, the mould 28 and the counter mould 30 can include respectively the receiving element 32 and the blocking element 34 in one body.

The shape of the insert may vary, maintaining however partitions and openings which form a coupling structure with a receiving element with analogous shape, in addition to ensuring a support structure to the membranes and the passage of air through the membrane itself.

## Claims

1. Process for coupling an insert (12) to an upper (14) obtained by means of injection moulding, by injecting a plastic material in an interspace formed between a mould (28) and a counter mould (30) in order to obtain the upper, said mould (28) comprising a receiving element (32) adapted to stably receive the insert (12), the counter mould (30) comprising a blocking element (34) adapted to block the insert (12) in the receiving element (32), the blocking element (34) comprising a protruding collar (44) which defines an empty chamber between the same blocking element (34) and the insert (12) so as to block the same insert (12) between mould (28) and counter mould (30) and put the insert (12) in pressure in correspondence of a peripheral portion corresponding to the protruding collar (44), said insert (12) comprising a membrane (18) joined to a support and protection structure (16) comprising, in turn, a central portion formed by partitions (24) and through-openings (26), a raised portion (22) and a peripheral edge (20), said process comprising the following phases:
- placing the insert (12) into a seat (46) formed in the mould (28);
- approaching the counter mould (30) to the mould (28) so as to obtain the interspace and causing the insert (12) to occupy a portion of the interspace formed between mould (28) and counter mould (30) so that the insert (12) is in contact with the mould (28) on the one side and with the counter mould (30) on the other side.

2. Process according to the preceding claim, wherein the following further phase is comprised:
- blocking the insert (12) between mould (28) and counter mould (30) in correspondence of a peripheral portion of the insert (12), shaped like a strip closed and in contact with both the mould (28) and the counter mould (30).

3. Process according to the preceding claim, wherein the peripheral portion of the insert (12) is shaped like a substantially circular crown.

4. Process according to claim 2 or 3, wherein when the insert (12) is blocked between mould (28) and counter mould (30), a further phase is comprised to create an empty chamber between counter mould (30) and mould (28), and at least a free space (48) between mould (28) and insert (12), said empty chamber and at least one free space (48) being included inside the peripheral portion so as to prevent mould (28) and counter mould (30) from contacting the portion of membrane (18) arranged internally to the peripheral portion also during the phase of injection moulding .

5. Apparatus (10) for coupling an insert (12) to an upper (14) obtained by means of injection moulding, said apparatus comprising a mould (28), a counter mould (30), between which an interspace is formed, and said insert (12) comprising a membrane (18) joined to a support and protection structure (16) comprising, in turn, a central portion formed by partitions (24) and through-openings (26), a raised portion (22) and a peripheral edge (20), wherein the mould (28) comprises a receiving element (32) adapted to stably receive the insert (12), and the counter mould (30) comprises a blocking element (34) adapted to block the insert (12) in the receiving element (32), the blocking element (34) comprising a protruding collar (44) which defines an empty chamber between the same blocking element (34) and the insert (12) so as to block the same insert (12) between mould (28) and counter mould (30) and put the insert in pressure in correspondence of the peripheral portion corresponding to the protruding collar (44).

6. Apparatus (10) according to the preceding claim, wherein the receiving element (32) comprises at least one tooth (38) adapted to be inserted in a corresponding opening (26).

7. Apparatus (10) according to the preceding claim, wherein the at least one tooth (38) has a lower height than the height of the partitions (24) so as to create a free space (48) when mould (28) and counter mould (30) are placed against each other for the injection of the material to be moulded.

8. Apparatus (10) according to one of claims 5 to 7, wherein a step (42) is formed in the receiving element (32) and is adapted to receive the raised portion (22) of the insert (12).

9. Apparatus (10) according to the preceding claim, wherein the step (42) has a lower height than the height of the portion (22) raised by the peripheral edge (20) of the insert (12) so as to create, in the moulding phase, a wing (50) of injected material.

10. Apparatus (10) according to one of claims 5 to 7, wherein the receiving element (32) is received in the mould (28) in a removable manner and/or the blocking element (34) is received in the counter mould (30) in a removable manner.

## Patentansprüche

1. Verfahren zum Verbinden eines Einsatzes (12) mit einem durch Spritzgießen erhaltenen Oberteil (14) durch Einspritzen eines Kunststoffmaterials in einen zwischen einer Form (28) und einer Gegenform (30) gebildeten Zwischenraum, um das Oberteil zu erhalten, wobei die Form (28) ein Aufnahmeelement (32) umfasst, das geeignet ist, den Einsatz (12) stabil aufzunehmen, wobei die Gegenform (30) ein Blockierelement (34) umfasst, das geeignet ist, den Einsatz (12) in dem Aufnahmeelement (32) zu blockieren, wobei das Blockierelement (34) einen vorstehenden Kragen (44) aufweist, der eine leere Kammer zwischen demselben Blockierelement (34) und dem Einsatz (12) definiert, um denselben Einsatz (12) zwischen Form (28) und Gegenform (30) zu blockieren und den Einsatz (12) in Übereinstimmung mit einem Umfangsabschnitt, der dem vorstehenden Kragen (44) entspricht, unter Druck zu setzen
wobei der Einsatz (12) eine Membran (18) umfasst
verbunden mit einer Stütz- und Schutzstruktur (16), die ihrerseits einen zentralen Abschnitt, der durch Trennwände (24) und Durchgangsöffnungen (26) gebildet wird, einen erhöhten Abschnitt (22) und einen Umfangsrand (20) aufweist, wobei das Verfahren aus den folgenden Phasen besteht:
- Einsetzen des Einsatzes (12) in einen in der Form (28) gebildeten Sitz (46);
- Annähern der Gegenform (30) an die Form (28), um den Zwischenraum zu erhalten, und Bewirken, dass der Einsatz (12) einen Teil des zwischen der Form (28) und der Gegenform (30) gebildeten Zwischenraums einnimmt, so dass der Einsatz (12) einerseits mit der Form (28) und andererseits mit der Gegenform (30) in Kontakt ist.

2. Verfahren nach dem vorhergehenden Anspruch, wobei die folgende weitere Phase umfasst ist:
- Blockieren des Einsatzes (12) zwischen der Form (28) und der Gegenform (30) in Übereinstimmung mit einem peripheren Abschnitt des Einsatzes (12), der wie ein geschlossener Streifen geformt ist und sowohl mit der Form (28) als auch mit der Gegenform (30) in Kontakt steht.

3. Verfahren nach dem vorhergehenden Anspruch, wobei der periphere Teil des Einsatzes (12) wie eine im wesentlichen kreisförmige Krone geformt ist.

4. Verfahren nach Anspruch 2 oder 3, wobei wenn der Einsatz (12) zwischen der Form (28) und der Gegenform (30) blockiert ist, eine weitere Phase vorgesehen ist, um eine leere Kammer zwischen der Gegenform (30) und der Form (28) und mindestens einen freien Raum (48) zwischen der Form (28) und dem Einsatz (12) zu schaffen, wobei die leere Kammer und mindestens ein freier Raum (48) innerhalb des peripheren Abschnitts eingeschlossen sind, um zu verhindern, dass die Form (28) und die Gegenform (30) den Abschnitt der Membran (18), der innerhalb des peripheren Abschnitts angeordnet ist, auch während der Phase des Spritzgießens berühren.

5. Vorrichtung (10) zum Verbinden eines Einsatzes (12) mit einem durch Spritzgießen erhaltenen Oberteil (14), wobei die Vorrichtung eine Form (28), eine Gegenform (30), zwischen denen ein Zwischenraum gebildet wird, und den Einsatz (12) umfasst, der eine Membran (18) umfasst, die mit einer Stütz- und Schutzstruktur (16) verbunden ist, die ihrerseits einen zentralen Abschnitt, der durch Trennwände (24) und Durchgangsöffnungen (26) gebildet wird, einen erhöhten Abschnitt (22) und einen Umfangsrand (20) umfasst, wobei
die Form (28) ein Aufnahmeelement (32) umfasst, die geeignet ist, den Einsatz (12) stabil aufzunehmen, und die Gegenform (30) ein Blockierelement (34) aufweist, das geeignet ist, den Einsatz (12) in dem Aufnahmeelement (32) zu blockieren, wobei das Blockierelement (34) einen vorstehenden Kragen (44) aufweist, der eine leere Kammer zwischen demselben Blockierelement (34) und dem Einsatz (12) definiert, um denselben Einsatz (12) zwischen der Form (28) und der Gegenform (30) zu blockieren und den Einsatz in Übereinstimmung mit dem Umfangsabschnitt, der dem vorstehenden Kragen (44) entspricht, unter Druck zu setzen.

6. Vorrichtung (10) nach dem vorhergehenden Anspruch, wobei das Aufnahmeelement (32) mindestens einen Zahn (38) aufweist, der geeignet ist, in eine entsprechende Öffnung (26) eingesetzt zu werden.

7. Vorrichtung (10) nach dem vorhergehenden Anspruch, wobei der mindestens eine Zahn (38) eine geringere Höhe als die Höhe der Trennwände (24) aufweist, so dass ein Freiraum (48) geschaffen wird, wenn die Form (28) und die Gegenform (30) für das Einspritzen des zu formenden Materials gegeneinander gestellt werden.

8. Vorrichtung (10) nach einem der Ansprüche 5 bis 7, wobei in dem Aufnahmeelement (32) eine Stufe (42) ausgebildet ist, die zur Aufnahme des erhöhten Teils (22) des Einsatzes (12) geeignet ist.

9. Vorrichtung (10) nach dem vorhergehenden Anspruch, wobei die Stufe (42) eine geringere Höhe aufweist als die Höhe des durch den Umfangsrand (20) des Einsatzes (12) angehobenen Teils (22), um in der Formgebungsphase einen Flügel (50) aus eingespritztem Material zu erzeugen.

10. Vorrichtung (10) nach einem der Ansprüche 5 bis 7, wobei das Aufnahmeelement (32) herausnehmbar in der Form (28) und/oder das Sperrelement (34) herausnehmbar in der Gegenform (30) aufgenommen ist.

## Revendications

1. Procédé pour accoupler un insert (12) à une tige (14) obtenue par moulage par injection, en injectant une matière plastique dans un espace intermédiaire formé entre un moule (28) et un contre-moule (30) afin d'obtenir la tige, ledit moule (28) comprenant un élément de réception (32) adapté pour recevoir de manière stable l'insert (12), le contre-moule (30) comprenant un élément de blocage (34) adapté pour bloquer l'insert (12) dans l'élément de réception (32), l'élément de blocage (34) comprenant un collier saillant (44) qui définit une chambre vide entre le même élément de blocage (34) et l'insert (12) de manière à bloquer le même insert (12) entre le moule (28) et le contre-moule (30) et à metre l'insert (12) en pression en correspondance avec une partie périphérique correspondant au collier saillant (44), ledit insert (12) comprenant une membrane (18) relié à une structure de support et de protection (16) comprenant, à son tour, une partie centrale formée par des cloisons (24) et des ouvertures traversantes (26), une partie surélevée (22) et un bord périphérique (20), ledit procédé
comprenant les phases suivantes :
- placement de l'insert (12) dans un siège (46) formé dans le moule (28) ;
- approcher le contre-moule (30) du moule (28) de manière à obtenir l'espace intermédiaire et faire en sorte que l'insert (12) occupe une partie de l'espace intermédiaire formé entre le moule (28) et le contre-moule (30) de manière à ce que l'insert (12) soit en contact avec le moule (28) d'un côté et avec le contre-moule (30) de l'autre côté.

2. Procédé selon la revendication précédente, dans lequel la phase suivante est comprise:
- le blocage de l'insert (12) entre le moule (28) et le contre-moule (30) en correspondance avec une partie périphérique de l'insert (12), en forme de bande fermée et en contact avec le moule (28) et le contre-moule (30).

3. Procédé selon la revendication précédente, dans lequel la partie périphérique de l'insert (12) a la forme d'une couronne sensiblement circulaire.

4. Procédé selon la revendication 2 ou 3, dans lequel, lorsque l'insert (12) est bloqué entre le moule (28) et le contre-moule (30), une autre phase est comprise pour créer une chambre vide entre le contre-moule (30) et le moule (28), et au moins un espace libre (48) entre le moule (28) et l'insert (12), ladite chambre vide et au moins un espace libre (48) étant inclus à l'intérieur de la partie périphérique de manière à empêcher le moule (28) et le contre-moule (30) d'entrer en contact avec la partie de la membrane (18) disposée à l'intérieur de la partie périphérique, également pendant la phase de moulage par injection.

5. Appareil (10) pour coupler un insert (12) à une tige (14) obtenue par moulage par injection, ledit appareil comprenant un moule (28), un contre-moule (30), entre lesquels un espace intermédiaire est formé, et ledit insert (12) comprenant une membrane (18) reliée à une structure de support et de protection (16) comprenant, à son tour, une partie centrale formée par descloisons (24) et des ouvertures traversantes (26), une partie surélevée (22) et un bord périphérique (20), dans lequel le moule (28) comprend un élément récepteur (32) adapté pour recevoir de manière stable l'insert (12), et le contre-moule (30) comprend un élément de blocage (34) adapté pour bloquer l'insert (12) dans l'élément de réception (32), l'élément de blocage (34) comprenant un collier saillant (44) qui définit une chambre vide entre le même élément de blocage (34) et l'insert (12) de manière à bloquer le même insert (12) entre le moule (28) et le contre-moule (30) et à mettre l'insert sous pression en correspondance avec la partie périphérique correspondant au collier saillant (44).

6. Appareil (10) selon la revendication précédente, dans lequel l'élément récepteur (32) comprend au moins une dent (38) adaptée pour être insérée dans une ouverture correspondante (26).

7. Appareil (10) selon la revendication précédente, dans lequel la au moins une dent (38) a une hauteur inférieure à la hauteur des cloisons (24) de manière à créer un espace libre (48) lorsque le moule (28) et le contre-moule (30) sont placés l'un contre l'autre pour l'injection du matériau à mouler.

8. Appareil (10) selon l'une des revendications 5 à 7, dans lequel un gradin (42) es tformé dans l'élément de réception (32) et est adapté pour recevoir la partie surélevée (22) de l'insert (12).

9. Appareil (10) selon la revendication précédente, dans lequel le gradin (42) a une hauteur inférieure à la hauteur de la partie (22) soulevée par le bord périphérique (20) de l'insert (12) de manière à créer, dans la phase de moulage, une aile (50) de matière injectée.

10. Appareil (10) selon l'une des revendications 5 à 7, dans lequel l'élément de réception (32) est reçu dans le moule (28) de manière amovible et/ou l'élément de blocage (34) est reçu dans le contre-moule (30) de manière amovible.
